# EUROPEAN PATENT APPLICATION

(11) **EP 4 408 096 A1**
(43) Date of publication of application: **31.07.2024**
(21) Application number: 21957982.8
(22) Date of filing: 26.09.2021
(51) Int. Cl.: H04W 72/04

(54) **RANDOM ACCESS METHOD, RANDOM ACCESS APPARATUS, AND STORAGE MEDIUM**

(71) Applicant: Beijing Xiaomi Mobile Software Co., Ltd., Beijing 100085 (CN)
(72) Inventor: QIAO, Xuemei, Beijing 100085 (CN)
(74) Representative: Zimmermann, Tankred Klaus
(86) International application number: PCT/CN2021/120748
(87) International publication number: WO 2023/044863

(57) **Abstract**

The present disclosure relates to a random access method, a random access apparatus, and a storage medium. The random access method is applied in a terminal and comprises: determining a semi-persistent transmission resource; and sending an uplink message for random access on the basis of the semi-persistent transmission resource. By means of the present disclosure, the number of steps for random access can be reduced, and the energy consumption of a terminal can be lowered.

## Description

### FIELD

The present invention relates to the technical field of wireless communication, and more particularly to a random access method, a random access apparatus, and a storage medium.

### BACKGROUND

In related technologies, a terminal may need to perform a random access process in a contention-based random access manner, for example, perform a random access process in a 2-step random access manner or perform a random access process in a 4-step random access manner. However, no matter which manner is used to perform the random access, a random access contention resolution needs to be performed based on an identification of the terminal. When the random access contention resolution is successful, it is determined that the terminal enters a connected state.

The contention-based random access, especially the 4-step random access, is complex, and has a large random access latency, resulting in a large power consumption for the terminal.

### SUMMARY

In order to overcome the problems existing in related technologies, the present invention provides a random access method, a random access apparatus, and a storage medium.

According to a first aspect of embodiments of the present invention, a random access method applied to a terminal is provided. The method includes: determining a semi-static transmission resource, and sending an uplink message for a random access based on the semi-static transmission resource.

In an implementation, the uplink message includes a radio resource control (RRC) resume request and/or an RRC setup request.

In an implementation, before sending the uplink message for the random access based on the semi-static transmission resource, the method further includes determining that a time advance of an uplink data transmission for the random access is valid.

In an implementation, the semi-static transmission resource is a semi-static transmission resource configured for a small data transmission (SDT) in an inactive state.

In an implementation, the uplink message includes no first identification information of the terminal, and the first identification information of the terminal is identification information of the terminal in an RRC inactive state.

In an implementation, the first identification information of the terminal is determined based on a position of the semi-static transmission resource that carries the uplink message.

In an implementation, the method further includes receiving downlink control information (DCI), and sending an acknowledgement message in response to determining that RRC resume information or RRC setup information is included in a downlink data transmission scheduled by the DCI.

In an implementation, the RRC resume message or the RRC setup information includes no contention resolution information.

In an implementation, the method further includes acquiring second identification information of the terminal based on received indication information or a communication protocol. The second identification information of the terminal is configured for data scheduling and data transmission.

According to a second aspect of embodiments of the present invention, a random access method, applied to a network device, is provided. The method includes receiving an uplink message for a random access sent by a terminal based on a semi-static transmission resource.

In an implementation, the uplink message includes a radio resource control (RRC) resume request and/or an RRC setup request.

In an implementation, the semi-static transmission resource is a semi-static transmission resource configured for a small data transmission in an inactive state.

In an implementation, the uplink message includes no first identification information of the terminal, and the first identification information of the terminal is identification information of the terminal in an RRC inactive state.

In an implementation, the first identification information of the terminal is determined based on a position of a semi-static resource that carries the uplink message.

In an implementation, the method further includes sending downlink control information (DCI) in response to receiving the uplink message. A downlink data transmission scheduled by the DCI includes RRC resume information or RRC setup information that is indicated to the terminal.

In an implementation, the RRC resume message or the RRC setup information includes no contention resolution information.

In an implementation, the method further includes sending an indication message. The indication message includes second identification information of the terminal, and the second identification information of the terminal is configured for data scheduling and data transmission.

According to a third aspect of embodiments of the present invention, there is provided a random access apparatus, which is applied to a terminal. The apparatus includes a processing module configured to determine a semi-static transmission resource, and a sending module configured to send an uplink message for a random access based on the semi-static transmission resource.

In an implementation, the uplink message includes a radio resource control (RRC) resume request and/or an RRC setup request.

In an implementation, before sending the uplink message for the random access based on the semi-static transmission resource, the method further includes determining that a time advance of an uplink data transmission for the random access is valid.

In an implementation, the semi-static transmission resource is a semi-static transmission resource configured for a small data transmission in an inactive state.

In an implementation, the uplink message includes no first identification information of the terminal, and the first identification information of the terminal is identification information of the terminal in an RRC inactive state.

In an implementation, the first identification information of the terminal is determined based on a position of the semi-static transmission resource that carries the uplink message.

In an implementation, the apparatus further includes a receiving module configured to receive downlink control information (DCI). An acknowledgement message is sent in response to determining that RRC resume information or RRC setup information is included in a downlink data transmission scheduled by the DCI.

In an implementation, the RRC resume message or the RRC setup information includes no contention resolution information.

In an implementation, the processing module is further configured to acquire second identification information of the terminal based on received indication information or a communication protocol. The second identification information of the terminal is configured for data scheduling and data transmission.

According to a fourth aspect of embodiments of the present invention, there is provided a random access apparatus, which is applied to a network device. The apparatus includes a receiving module configured to receive an uplink message for a random access sent by a terminal based on a semi-static transmission resource.

In an implementation, the uplink message includes a radio resource control (RRC) resume request and/or an RRC setup request.

In an implementation, the semi-static transmission resource is a semi-static transmission resource configured for a small data transmission in an inactive state.

In an implementation, the uplink message includes no first identification information of the terminal, and the first identification information of the terminal is identification information of the terminal in an RRC inactive state.

In an implementation, the first identification information of the terminal is determined based on a position of a semi-static resource that carries the uplink message.

In an implementation, the apparatus further includes a sending module configured to send downlink control information (DCI) in response to receiving the uplink message. A downlink data transmission scheduled by the DCI includes RRC resume information or RRC setup information that is indicated to the terminal.

In an implementation, the RRC resume message or the RRC setup information includes no contention resolution information.

In an implementation, the sending module is further configured to send an indication message. The indication message includes second identification information of the terminal, and the second identification information of the terminal is configured for data scheduling and data transmission.

According to a fifth aspect of embodiments of the present invention, there is provided a random access device. The random access device includes a processor, and a memory for storing instructions executable by the processor. The processor is configured to perform the random access method described in the first aspect or any one of implementations of the first aspect, or the random access method described in the second aspect or any one of implementations of the second aspect.

According to a sixth aspect of embodiments of the present invention, there is provided a storage medium. The storage medium has stored therein instructions that, when executed by a processor of a mobile terminal, enable the mobile terminal to perform the random access method described in the first aspect or any one of implementations of the first aspect, or enable the mobile terminal to perform the random access method described in the second aspect or any one of implementations of the second aspect.

The technical solution provided in the embodiment of the present invention may include the following beneficial effects. The terminal sends the uplink message for the random access based on the semi-static transmission resource, which may reduce an amount of the steps of the random access and reduce energy consumption of the terminal.

It is to be understood that both the foregoing general description and the following detailed description are illustrative and explanatory only and are not restrictive of the present invention.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
FIG. 1 is a schematic diagram showing an architecture of a communication system of a network device and a terminal according to an illustrative embodiment.
FIG. 2 is a flow chart showing a random access method according to an illustrative embodiment.
FIG. 3 is a flow chart showing a random access method according to an illustrative embodiment.
FIG. 4 is a flow chart showing a random access method according to an illustrative embodiment.
FIG. 5 is a flow chart showing a random access method according to an illustrative embodiment.
FIG. 6 is a flow chart showing a random access method according to an illustrative embodiment.
FIG. 7 is a block diagram showing a random access apparatus according to an illustrative embodiment.
FIG. 8 is a block diagram showing a random access apparatus according to an illustrative embodiment.
FIG. 9 is a block diagram showing a device for a random access according to an illustrative embodiment.
FIG. 10 is a block diagram showing a device for a random access according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present invention. Instead, they are merely examples of apparatuses and methods consistent with some aspects of the present invention as recited in the appended claims.

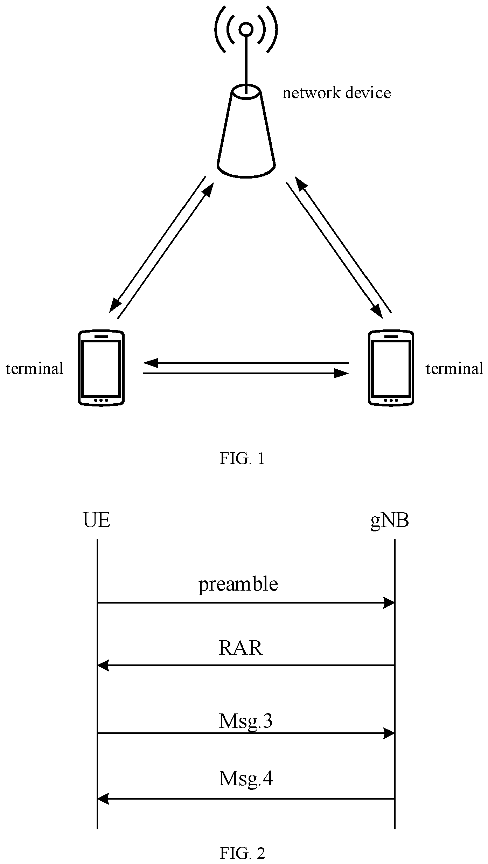

FIG. 1 is a schematic diagram showing an architecture of a communication system of a network device and a terminal according to an illustrative embodiment. A communication method provided in the present invention may be applied to the architecture of the communication system shown in FIG. 1. As shown in FIG. 1, a network device may send a signaling based on the architecture shown in FIG. 1.

It may be understood that the communication system including the network device and the terminal shown in FIG. 1 is only for schematic illustration. A wireless communication system may further include other network devices, such as a core network device, a wireless relay device, and a wireless backhaul device, which are not shown in FIG. 1. The number of network devices and terminals included in the wireless communication system is not limited in the embodiments of the present invention.

It may be further understood that the wireless communication system according to the embodiments of the present invention is a network that provides a wireless communication function. The wireless communication system may adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), carrier sense multiple access with collision avoidance. According to the capacity, speed, latency and other factors of different networks, the networks may be classified into a 2nd generation (2G) network, a 3G network, a 4G network or a future evolution network, such as a 5G network, the 5G network may also be referred to as a new radio (NR). For convenience of description, the wireless communication network is sometimes referred to as a network for short in the present invention.

Further, the network device involved in the present invention may also be referred to as a wireless access network device. The wireless access network device may be a base station, an evolved node B, a home base station, an access point (AP) in a wireless fidelity (WIFI) system, a wireless relay node, a wireless backhaul node, a transmission point (TP), a transmission and reception point (TRP), etc., and it may also be a gNB in an NR system, or it may also be a component or part of device that constitutes a base station. When it is a vehicle to everything (V2X) communication system, the network device may also be an in-vehicle device. It is to be understood that in the embodiments of the present invention, a specific technology and a specific device form adopted by the network device are not limited.

Further, the terminal involved in the present invention may also be referred to as a terminal device, a user equipment (UE), a mobile station (MS), a mobile terminal (MT), etc. It is a device that provides voice and/or data connectivity to a user. For example, the terminal may be a handheld device with a wireless connection function, an in-vehicle device, etc. At present, some examples of terminals are a mobile phone, a pocket personal computer (PPC), a palmtop computer, a personal digital assistant (PDA), a notebook computer, a tablet computer, a wearable device, or an in-vehicle device. In addition, when it is a vehicle to everything (V2X) communication system, the terminal device may also be an in-vehicle device. It is to be understood that a specific technology and a specific device form adopted by the terminal are not limited in the embodiments of the present invention.

In the discussion of a new radio (NR), it is proposed to support a small data transmission (SDT) in an inactive state, so as to reduce energy consumption of the terminal. That is, the terminal may complete a data transmission without entering a connected state, so as to avoid wasting time-frequency resources, shorten data transmission delay, and reduce energy consumption of the terminal at the same time. Generally, the SDT is performed in two manners: a random access-based SDT (RA-based SDT) and a semi-statically configured SDT (also called a configured grant-SDT, CG-SDT).

Regarding the semi-statically configured SDT, when a radio resource control (RRC) connected state is switched to an RRC inactive state, the base station sends a RRC release message carrying information required for the SDT, such as semi-static time-frequency domain resource allocation information and validity determination of a time advance (TA). When the terminal in an inactive state has uplink data to be transmitted, it determines the TA validity, the coverage condition and the size of date. In a case where the TA is valid, the coverage condition is satisfied, and the size of the date reaches the threshold, the terminal uses the semi-static resource configured by the base station to perform the SDT.

The RA-based SDT may be performed in two manners, namely an SDT based on a 2-step random access channel (RACH) and an SDT based on a 4-step RACH. For the SDT based on the 2-step RACH, a small data packet will be transmitted in a physical uplink shared channel (PUSCH) resource of a random access request message (msgA). For the SDT based on the 4-step RACH, a small data packet will be carried in msg3. For the SDT based on the RACH, the determination of the size of data is still needed. Only when the size of the data is less than a threshold, may the small data be transmitted in the random access process. Otherwise, the small data packet is transmitted after the terminal enters the connected state by performing the RACH process. In addition to the limitation of the size of the data, the terminal needs to compare a current synchronization signal reference signal receiving power (SS-RSRP) with a reference signal receiving power (RSRP) threshold before performing the transmission of the small data packet. Only when the current SS-RSRP is greater than the RSRP threshold, the transmission of the small data packet is performed. The purpose of comparing with the RSRP threshold here is to ensure that the SDT may only be performed under good coverage condition, so as to avoid wasting uplink transmission resources.

For the CG-SDT, it is proposed in related technologies that a UE-special search space (USS) may be configured for retransmission scheduling of the small data and subsequent downlink data scheduling, etc. For a subsequent transmission of the terminal, it is further proposed to configure a cell-radio network temporary identifier (C-RNTI) for each terminal in an inactive state. The C-RNTI correspondingly configured for one terminal in the inactive state may be the same as a C-RNTI of the terminal in an RRC connected state (RRC_CONNECTED), or may be configured by a network device via an explicit signaling.

On the other hand, in related technologies, reference may be made to FIG. 2 for a 4-step RACH contention-based random access manner. FIG. 2 is a flow chart showing a random access method according to an illustrative embodiment. As shown in FIG. 2, in a first step, a terminal sends a random access request to a network device via a physical random access channel (PRACH) resource. In a second step, the network device transmits a random access response (RAR) message to allocate a temporary cell-radio network temporary identifier (TC-RNTI) to the terminal and provide an uplink (UL) resource required by message 3 (Msg.3). The terminal performs blind decoding on a physical downlink control channel (PDCCH) scheduling the RAR with a random access radio network temporary identifier (RA-RNTI). In a third step, the terminal sends Msg.3 to the network device. Msg.3 includes a high layer signaling such as an RRC resume request, which carries an identifier, like i-RNTI or short i-RNTI, and a random access contention resolution is started. In a fourth step, the terminal performs blind decoding on downlink control information (DCI) scheduling Msg.4 with the TC-RNTI acquired in the second step. If the decoding is successful, and the content in the UE contention resolution identity MAC control element (MAC CE) contained in Msg.4 is consistent with some bits (generally the first 48 bits) of the RRC resume request of Msg.3, the contention resolution is successful, and the terminal changes the TC-RNTI into the C-RNTI, which is used for data transmission in the connected state.

According to the above embodiments, in related technologies, the contention-based random access, such as 4-step RACH procedure, has complex steps and a large random access latency, and is not conducive to energy saving for the terminal.

In order to reduce steps of the random access and reduce the energy consumption of the terminal, the present invention proposes a random access method, which initiates a random access by configuring a semi-static transmission resource for the SDT of the terminal. By initiating the random access on the semi-static transmission resource configured for the SDT of the terminal, Msg.3 of an uplink message may be directly sent, thus shortening the random access process, and realizing the effect of reducing energy consumption for the terminal.

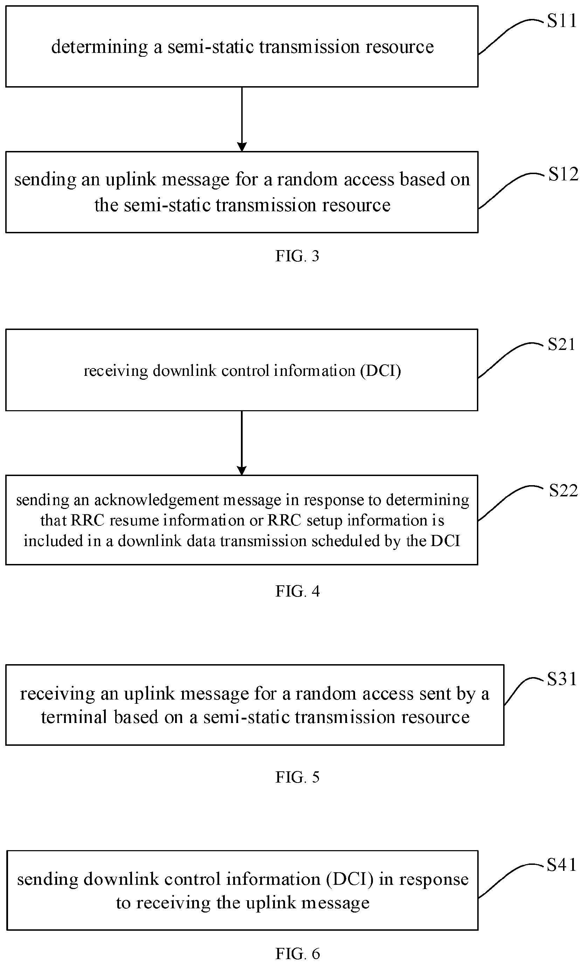

FIG. 3 is a flow chart showing a random access method according to an illustrative embodiment. As shown in FIG. 3, the random access method is applied to a terminal and includes steps as follows.

In step S 11, a semi-static transmission resource is determined.

In step S12, an uplink message for a random access is sent based on the semi-static transmission resource.

In an embodiment of the present invention, the semi-static transmission resource is a semi-static transmission resource configured for a small data transmission (SDT) in an inactive state.

In the embodiment of the present invention, the terminal determines the semi-static transmission resource configured for the small data transmission (SDT) in the inactive state. When the terminal needs to enter an RRC connected state, the uplink message for the random access is sent based on the semi-static transmission resource configured for the data transmission. When the terminal needs to enter the RRC connected state, the terminal sends a request to a network device to allow the terminal to access a network and establish a network connection. At this time, the terminal may use the semi-static transmission resource configured for the SDT in the inactive state to send Msg.3 for the random access to implement the random access. In other words, in the present invention, in a case where the terminal is configured with the semi-static transmission resource configured for the SDT in the inactive state, Msg.3 for the random access may be initiated based on the semi-static transmission resource. The semi-static transmission resource configured for the SDT in the inactive state may be determined by the terminal based on a configuration of a network device, determined based on pre-stored configuration information, or determined based on a communication protocol.

In the random access method proposed in the present invention, Msg.3 for the random access may be sent based on the semi-static transmission resource to implement the random access, which shortens the process of the random access and achieves the effect of reducing energy consumption of the terminal.

In an embodiment of the present invention, the uplink message includes a radio resource control (RRC) resume request and/or an RRC setup request. The terminal may be a terminal configured with the CG-SDT in the inactive state.

In some embodiments of the present invention, when the terminal needs to perform the random access, the TA corresponding to an uplink data transmission for the random access needs to be determined. When it is determined that the TA is valid, an RRC resume request and/or an RRC setup request are/is sent to the network device (e.g., a base station) via the semi-static transmission resource configured for the small data transmission of the terminal to initiate the random access.

In embodiments of the present invention, the semi-static transmission resource configured for the small data transmission of the terminal is a semi-static transmission resource configured for a small data transmission of the terminal in an RRC inactive state.

In some embodiments of the present invention, the uplink message includes no first identification information of the terminal. The first identification information of the terminal is identification information of the terminal in an RRC inactive state. For example, the first identification information is i-RNTI.

It is to be noted that a position of the semi-static transmission resource (configured by the network device) for the small data transmission of the terminal has a mapping relationship with identification information of the terminal. That is, in the case where the terminal sends the uplink message for the random access based on the semi-static transmission resource, the first identification information of the terminal may be considered as to be implicitly indicated to the network device due to the mapping relationship between the position of the semi-static transmission resource and the identification information of the terminal, that is, the i-RNTI of the terminal is implicitly indicated to the network device based on the position of the semi-static transmission resource, where the i-RNTI is configured for the terminal to perform the random access.

In embodiments of the present invention, after sending the RRC resume request and/or the RRC setup request, the terminal will receive downlink control information (DCI) issued by the network device via a common search space (CSS) or a USS, and determine that the random access is completed. For execution steps, reference may be made to FIG. 4.

FIG. 4 is a flow chart showing a random access method according to an illustrative embodiment. As shown in FIG. 4, the random access method is applied to the terminal and includes steps as follows.

In step S21, downlink control information (DCI) is received.

In step S22, an acknowledgement message is sent in response to determining that RRC resume information or RRC setup information is included in a downlink data transmission scheduled by the DCI.

In an embodiment of the present invention, the terminal performs Msg.4 scheduling for the random access based on the DCI received via the CSS/USS, and determines RRC information contained in Msg.4. In an implementation, in a case where Msg.4 includes RRC resume information or RRC setup information, the acknowledgement message (i.e., an acknowledge character, ACK) is fed back to the base station, and the random access process is completed. In another implementation, in a case where Msg.4 includes no RRC resume information or RRC setup information, the ACK is not sent (or NACK is sent), and the random access process is not completed.

In embodiments of the present invention, the DCI is sent by the base station according to a received uplink message for the random access sent by the terminal. The uplink message is sent by the terminal using the semi-static transmission resource configured for the small data transmission (SDT) in the inactive state.

In embodiments of the present invention, the RRC resume message or the RRC setup information may include no contention resolution information. As mentioned above, the position of the semi-static transmission resource (configured by the network device) for the small data transmission of the terminal has the mapping relationship with the identification information of the terminal. The terminal initiates the random access based on the physical resource corresponding to the terminal, (i.e., the terminal and the resource are in one-to-one correspondence), and thus there is no need to perform the contention resolution.

In embodiments of the present invention, in a case where the terminal is in the inactive state and second identification information of the terminal is not acquired, the second identification information of the terminal may be acquired based on received indication information or a communication protocol. The second identification information of the terminal is configured for data scheduling and data transmission. The second identification information of the terminal may be C-RNTI.

In some embodiments of the present invention, the terminal acquires the second identification information based on the received indication information or the communication protocol. One manner is that a DCI dynamic signaling received by the terminal carries the second identification information of the terminal. Alternatively, one manner is that the MAC CE received by the terminal carries the second identification information of the terminal. Another manner is that a RRC signaling received by the terminal carries the second identification information of the terminal. Yet another manner is to use, according to the provision of the communication protocol, the same second identification information (i.e., C-RNTI) of the terminal before the RRC connection is released.

Based on the same/similar concept, embodiments of the present invention further provide a random access method.

FIG. 5 is a flow chart showing a random access method according to an illustrative embodiment. As shown in FIG. 5, the random access method is applied to a network device and includes step(s) as follows.

In step S31, an uplink message for a random access sent by a terminal based on a semi-static transmission resource is received.

In an embodiment of the present invention, the semi-static transmission resource is a semi-static transmission resource configured for a small data transmission (SDT) in an inactive state.

In embodiments of the present invention, the terminal determines the semi-static transmission resource configured for the data transmission. When the terminal needs to enter an RRC connected state, the uplink message for the random access is sent based on the semi-static transmission resource configured for the data transmission. The terminal sends a request to a network device to allow the terminal to access a network and establish a network connection. In other words, in the present invention, in a case where the terminal is configured with the semi-static transmission resource configured for the data transmission, Msg.3 for the random access may be initiated based on the semi-static transmission resource. The semi-static transmission resource configured for the small data transmission (SDT) in the inactive state may be determined by the terminal based on a configuration of a network device, determined based on pre-stored configuration information, or determined based on a communication protocol.

That is, the method includes an optional step.

In step S32, a configuration message is sent. The configuration message is configured to indicate a semi-static transmission resource configured for a small data transmission (SDT) of a terminal in an inactive state.

This step S32 may not be executed, may be executed before step S31, or may be executed after step S31.

In an embodiment of the present invention, when the terminal needs to enter the RRC connected state, the uplink message for the random access is sent based on the semi-static transmission resource configured for the data transmission. When the terminal needs to enter the RRC connected state, the terminal sends a request to a network device to allow the terminal to access a network and establish a network connection. At this time, the terminal may use the semi-static transmission resource configured for the SDT in the inactive state to send Msg.3 for the random access to implement the random access. In other words, in the present invention, in a case where the terminal is configured with the semi-static transmission resource configured for the SDT in the inactive state, Msg.3 for the random access may be initiated based on the semi-static transmission resource. The semi-static transmission resource configured for the SDT in the inactive state may be determined by the terminal based on a configuration of a network device, determined based on pre-stored configuration information, or determined based on a communication protocol.

In the random access method proposed in the present invention, Msg.3 for the random access may be received based on the semi-static transmission resource to implement the random access, which shortens a process of the random access of the terminal and achieves the effect of reducing energy consumption of the terminal.

In an embodiment of the present invention, the uplink message includes a radio resource control (RRC) resume request and/or an RRC setup request. The terminal may be a terminal configured with the CG-SDT in the inactive state.

In embodiments of the present invention, the semi-static transmission resource configured for the small data transmission of the terminal is a semi-static transmission resource configured for a small data transmission of the terminal in an RRC inactive state.

In some embodiments of the present invention, the uplink message includes no first identification information of the terminal. The first identification information of the terminal is identification information of the terminal in an RRC inactive state. For example, the first identification information is i-RNTI.

It is to be noted that a position of the semi-static transmission resource (configured by the network device) for the small data transmission of the terminal has a mapping relationship with identification information of the terminal. That is, in the case where the terminal sends the uplink message for the random access based on the semi-static transmission resource, the first identification information of the terminal may be considered as to be implicitly indicated to the network device due to the mapping relationship between the position of the semi-static transmission resource and the identification information of the terminal, that is, the i-RNTI of the terminal is implicitly indicated to the network device based on the position of the semi-static transmission resource, where the i-RNTI is configured for the terminal to perform the random access.

In embodiments of the present invention, after receiving the uplink message including the RRC resume request and/or the RRC setup request, the network device will issue the DCI via a CSS or a USS to determine that the random access of the terminal is completed. For execution steps, reference may be made to FIG. 6.

FIG. 6 is a flow chart showing a random access method according to an illustrative embodiment. As shown in FIG. 6, the random access method is applied to a network device and includes steps as follows.

In step S41, downlink control information (DCI) is sent in response to receiving an uplink message.

The uplink message may be an uplink message for the random access sent by the terminal using a semi-static transmission resource configured for a small data transmission (SDT) in an inactive state.

The downlink data transmission scheduled by the DCI includes RRC resume information or RRC setup information that is indicated to the terminal.

In an embodiment of the present invention, the network device sends the DCI based on the CSS/USS, and the DCI is used for Msg.4 scheduling for the random access of the terminal. In a case where an ACK sent by the terminal is received, it is confirmed that the random access process of the terminal is completed. In a case where an ACK sent by the terminal is not received, it is confirmed that the random access process of the terminal is not completed.

In embodiments of the present invention, the RRC resume message or the RRC setup information may include no contention resolution information. As mentioned above, the position of the semi-static transmission resource configured for the small data transmission has the mapping relationship with the identification information of the terminal. The network device may determine, based on the mapping relationship between the position of the semi-static transmission resource configured for the small data transmission and the identification information of the terminal, the terminal that initiates the random access request, and the second identification information may be uniquely allocated to the terminal.

In embodiments of the present invention, in a case where the network device determines that the terminal is in the inactive state and does not acquire the second identification information of the terminal, indication information may be sent. The indication message includes the second identification information of the terminal, and the second identification information of the terminal is configured for data scheduling and data transmission. The second identification information of the terminal may be the C-RNTI.

The network device sends an indication message to configure the second identification information for the terminal. One manner may be sending the DCI to the terminal, and dynamically scheduling, by the DCI, the second identification information of the terminal carried in the signaling. Alternatively, one manner is that the MAC CE sent to the terminal carries the second identification information of the terminal.

In embodiments of the present invention, the technical solution may be briefly described as follows.

For a CG-SDT, a terminal is configured with a semi-static uplink transmission resource. In this case, if the terminal intends to enter an RRC _CONNECTED state, it may directly send Msg.3 via the semi-static uplink transmission resource configured by a base station, so as to shorten a random access process. Specifically, there are the following designs.

(1) When the terminal intends to perform the random access, it first needs to determine whether the TA is valid. When the TA is valid, an RRCResumeRequest is sent to the base station via the semi-static resource configured for the SDT to initiate the random access.

(2) After receiving Msg.3 sent by the terminal via the semi-static configured uplink resource, the base station will issue the DCI via the CSS/USS to perform Msg.4 scheduling. Msg.4 includes RRC resume. Accordingly, after receiving the RRC resume, the terminal feeds back an ACK, and the random access process is completed.

It can be known that the above steps (1) and (2) are executed by the terminal and the base station, respectively. In the above embodiment, two steps written together are merely illustrative.

Specifically, for the terminal, the method executed is as follows.

In response to the terminal performing the random access and the TA being valid, the terminal sends the RRCResumeRequest to the base station via the semi-static resource configured for the SDT to initiate the random access. The terminal receives the DCI issued by the base station via the CSS/USS, and performs Msg.4 scheduling. The Msg.4 includes RRC resume. The terminal performs HARQ feedback according to the RRC resume (that is, feeds back the ACK if the RRC resume is received). The random access is completed.

Specifically, for the base station, the method is as follows.

In response to the base station receiving Msg.3 sent based on the semi-static configured uplink resource when the terminal performs the random access, the DCI is issued via the CSS/USS to perform Msg.4 scheduling. Msg.4 includes RRC resume.

A receiving terminal may perform HARQ feedback according to the RRC resume (that is, feeds back the ACK if the RRC resume is received).

Optionally, since the semi-static uplink resource has a mapping relationship with an ID of the terminal, an RRCResumeRequest message does not need to include information such as i-RNTI. Similarly, Msg.4 does not need to include information such as content resolution identity MAC CE.

In addition, in a case where the terminal in an inactive state does not acquire C-RNTI, the base station will allocate one C-RNTI to the terminal via Msg.4. Specifically, the C-RNTI may be carried by the DCI, or may be carried by the RRCResume or the MAC CE.

In a possible implementation, a transmitted signaling may be:

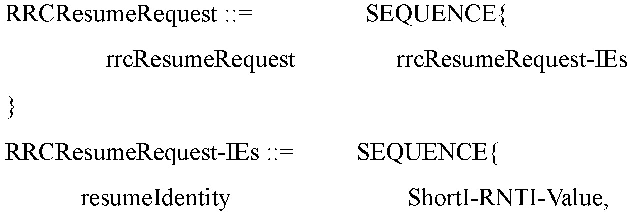

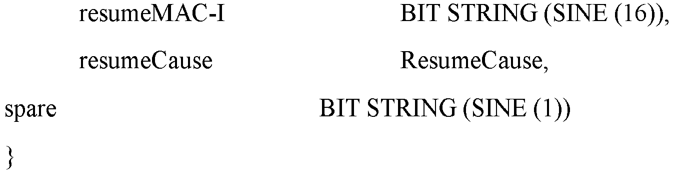

Based on the same concept, embodiments of the present invention further provide a random access apparatus.

It may be understood that, in order to realize the above-mentioned functions, the random access apparatus provided in embodiments of the present invention includes corresponding hardware structures and/or software modules for executing various functions. Combining with units and algorithm steps of various examples disclosed in the embodiments of the present invention, the embodiments of the present invention may be implemented in the form of hardware or a combination of hardware and computer software. Whether a certain function is executed by hardware or computer software driving hardware depends on the specific application and design constraints of the technical solution. Those skilled in the art may use different methods to implement the described functions for each specific application, but such implementation should not be considered as extending beyond the scope of the technical solutions of the embodiments of the present invention.

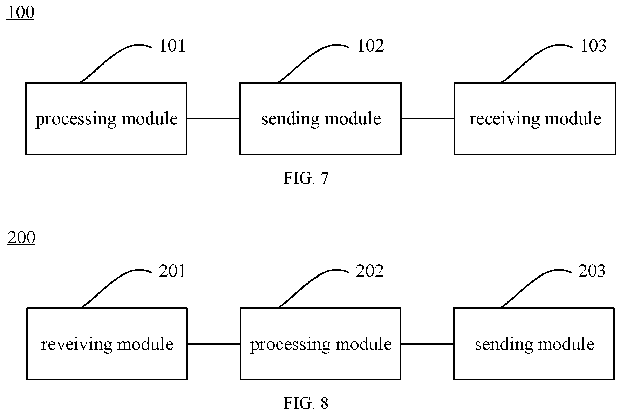

FIG. 7 is a block diagram showing a random access apparatus according to an illustrative embodiment. Referring to FIG. 7, the random access apparatus 100 is applied to a terminal, and includes a processing module 101 and a sending module 102.

The processing module 101 is configured to determine a semi-static transmission resource. The sending module 102 is configured to send an uplink message for a random access based on the semi-static transmission resource.

In an embodiment of the present invention, the uplink message includes a radio resource control (RRC) resume request and/or an RRC setup request.

In an embodiment of the present invention, before sending the uplink message for the random access based on the semi-static transmission resource, the method further includes determining that a time advance of an uplink data transmission for the random access is valid.

In an embodiment of the present invention, the semi-static transmission resource is a semi-static transmission resource configured for a small data transmission in an inactive state.

In an embodiment of the present invention, the uplink message includes no first identification information of the terminal, and the first identification information of the terminal is identification information of the terminal in an RRC inactive state.

In an embodiment of the present invention, the first identification information of the terminal is determined based on a position of the semi-static transmission resource that carries the uplink message.

In an embodiment of the present invention, the apparatus further includes a receiving module 103. The receiving module 103 is configured to receive downlink control information (DCI). An acknowledgement message is sent in response to determining that RRC resume information or RRC setup information is included in a downlink data transmission scheduled by the DCI.

In an embodiment of the present invention, the RRC resume message or the RRC setup information includes no contention resolution information.

In an embodiment of the present invention, the processing module 101 is further configured to acquire second identification information of the terminal based on received indication information or a communication protocol. The second identification information of the terminal is configured for data scheduling and data transmission.

FIG. 8 is a block diagram showing a random access apparatus according to an illustrative embodiment. Referring to FIG. 8, the random access apparatus 200 is applied to a network device, and includes a receiving module 201.

The receiving module 201 is configured to receive an uplink message for a random access sent by a terminal based on a semi-static transmission resource.

In an embodiment of the present invention, the uplink message includes a radio resource control (RRC) resume request and/or an RRC setup request.

In an embodiment of the present invention, the random access apparatus further includes a processing module 202 configured to determine a semi-static transmission resource configured for a small data transmission in an inactive state.

In an embodiment of the present invention, the uplink message includes no first identification information of the terminal, and the first identification information of the terminal is identification information of the terminal in an RRC inactive state.

In an embodiment of the present invention, the first identification information of the terminal is determined based on a position of the semi-static resource that carries the uplink message.

In an embodiment of the present invention, the apparatus further includes a sending module 203 configured to send downlink control information (DCI) in response to receiving the uplink message. A downlink data transmission scheduled by the DCI includes RRC resume information or RRC setup information that is indicated to the terminal.

In an embodiment of the present invention, the RRC resume message or the RRC setup information includes no contention resolution information.

In an embodiment of the present invention, the sending module 203 is further configured to send an indication message. The indication message includes second identification information of the terminal, and the second identification information of the terminal is configured for data scheduling and data transmission.

Regarding the apparatus in the above-mentioned embodiment, the specific manner in which each module performs operations has been described in detail in the embodiment of the method, which will not be elaborated herein.

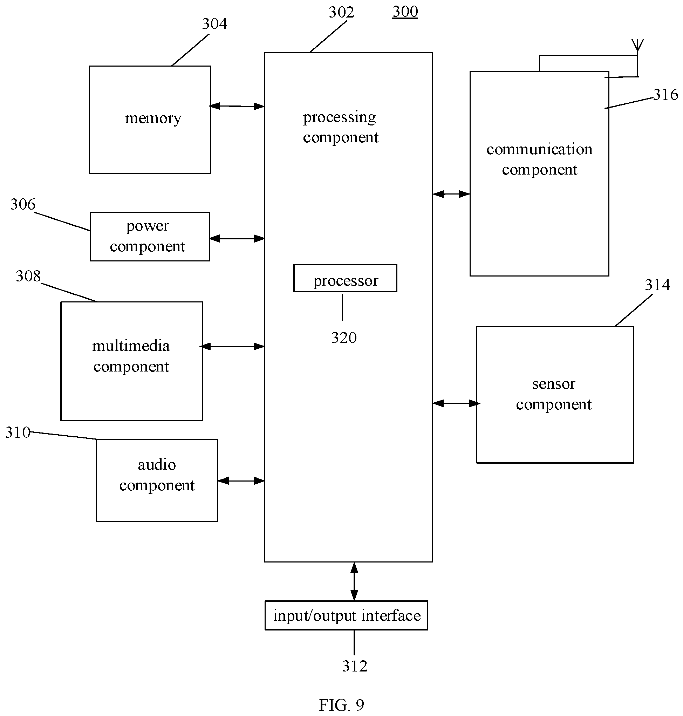

FIG. 9 is a block diagram showing a device 300 for a random access according to an illustrative embodiment. For example, the device 300 may be a mobile phone, a computer, a digital broadcast terminal, a messaging device, a game console, a tablet device, a medical device, a fitness device, a personal digital assistant, or the like.

Referring to FIG. 9, the device 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the device 300, such as the operations associated with display, phone calls, data communications, camera operations, and recording operations. The processing component 302 may include one or more processors 320 to execute instructions to perform all or some of the steps in the above-described methods. Moreover, the processing component 302 may include one or more modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the device 300. Examples of such data include instructions for any applications or methods operated on the device 300, contact data, phonebook data, messages, pictures, videos, etc. The memory 304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 306 provides power to various components of the device 300. The power component 306 may include a power management system, one or more power sources, and any other components associated with the generation, management, and distribution of power in the device 300.

The multimedia component 308 includes a screen providing an output interface between the device 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 308 includes a front camera and/or a rear camera. The front camera and/or the rear camera may receive an external multimedia datum while the device 300 is in an operation mode, such as a photographing mode or a video mode. Each of the front camera and the rear camera may be a fixed optical lens system or have focus and optical zoom capability.

The audio component 310 is configured to output and/or input audio signals. For example, the audio component 310 includes a microphone (MIC) configured to receive an external audio signal when the device 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as keyboards, click wheels, buttons, and the like. The buttons may include, but are not limited to, a home button, a volume button, a starting button, and a locking button.

The sensor component 314 includes one or more sensors to provide status assessments of various aspects of the device 300. For instance, the sensor component 314 may detect an open/closed status of the device 300, relative positioning of components, e.g., the display and the keypad, of the device 300, a change in position of the device 300 or a component of the device 300, a presence or absence of user contact with the device 300, an orientation or an acceleration/deceleration of the device 300, and a change in temperature of the device 300. The sensor component 314 may include a proximity sensor configured to detect the presence of nearby objects without any physical contact. The sensor component 314 may further include a light sensor, such as a CMOS or CCD image sensor, for use in imaging applications. In some embodiments, the sensor component 314 may further include an accelerometer sensor, a gyroscope sensor, a magnetic sensor, a pressure sensor, or a temperature sensor.

The communication component 316 is configured to facilitate communication, wired or wireless, between the device 300 and other devices. The device 300 may access a wireless network based on a communication standard, such as Wi-Fi, 2G, or 3G, or a combination thereof. In an illustrative embodiment, the communication component 316 receives a broadcast signal or broadcast associated information from an external broadcast management system via a broadcast channel. In an illustrative embodiment, the communication component 316 further includes a near field communication (NFC) module to facilitate short-range communications. For example, the NFC module may be implemented based on a radio frequency identifier (RFID) technology, an infrared data association (IrDA) technology, an ultra-wideband (UWB) technology, a Bluetooth (BT) technology, and other technologies.

In an illustrative embodiment, the device 300 may be implemented with one or more of an application specific integrated circuits (ASIC), a digital signal processor (DSP), a digital signal processing device (DSPD), a programmable logic device (PLD), a field programmable gate array (FPGA), a controller, a micro-controller, a microprocessor, or other electronic elements, for performing the above-mentioned method.

In an illustrative embodiment, there is also provided a non-transitory computer readable storage medium including instructions, such as included in the memory 304, executable by the processor 320 in the device 300, for completing the above-mentioned method. For example, the non-transitory computer-readable storage medium may be a ROM, a random access memory (RAM), a CD-ROM, a magnetic tape, a floppy disc, an optical data storage device, and the like.

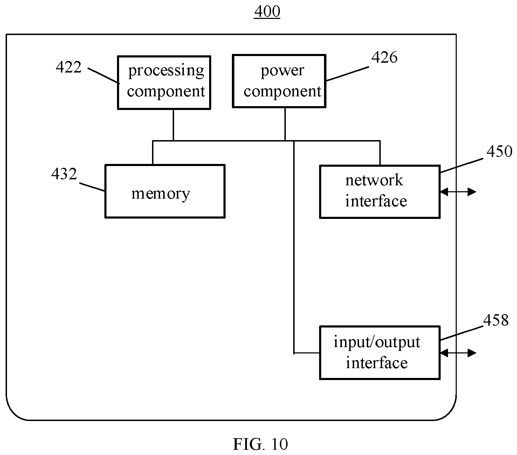

FIG. 10 is a block diagram showing a device 400 for a random access according to an illustrative embodiment. For example, the device 400 may be provided as a server. Referring to FIG. 10, the device 400 includes a processing component 422, which further includes one or more processors, and memory resources represented by a memory 432 for storing instructions executable by the processing component 422, such as an application program. The application program stored in the memory 432 may include one or more modules each corresponding to a set of instructions. In addition, the processing component 422 is configured to execute instructions to perform the above-mentioned method.

The device 400 may further include a power component 426 configured to perform power management of the device 400, a wired or wireless network interface 450 configured to connect the device 400 to a network, and an input/output (I/O) interface 458. The device 400 may operate based on an operating system stored in the memory 432, such as Windows ServerTM, Mac OS XTM, UnixTM, LinuxTM, FreeBSDTM, or the like.

It is further understood that "a plurality" in the present invention refers to two or more, and other quantifiers are similar thereto. "And/or," which describes an associated relationship of associated objects, means that there may be three relationships, for example, A and/or B, which may mean that A exists alone, A and B exist at the same time, and B exists alone. A character "/" generally indicates that contextual objects are in an "or" relationship. "A/an" and "the" in singular forms are intended to include plural forms, unless clearly indicated in the context otherwise.

It is further understood that terms such as "first," and "second" are used to describe various information, but these information should not be limited by these terms. These terms are only used for distinguishing information of the same type from each other and do not denote a particular order or degree of importance. As a matter of fact, the terms such as "first," and "second" may be used interchangeably. For example, first information may also be referred to as second information, and similarly, the second information may also be referred to as the first information, without departing from the scope of embodiments of the present invention.

It is further understood that although operations are described in a specific order in the accompanying drawings in the embodiments of the present invention, it should not be understood that these operations are required to be performed in the specific order shown or in a serial order, or that all of the operations shown are required to be performed to obtain desired results. In certain circumstances, multitasking and parallel processing may be advantageous.

Other embodiments of the present invention will be apparent to those skilled in the art from consideration of the specification and practice of the present invention disclosed here. The present invention is intended to cover any variations, uses, or adaptations of the present invention following the general principles thereof and including such departures from the present invention as come within known or customary practice in the art. It is intended that the specification and examples be considered as illustrative only, with a true scope and spirit of the present invention being indicated by the scope of the following claims.

It will be appreciated that the present invention is not limited to the exact construction that has been described above and illustrated in the accompanying drawings, and that various modifications and changes may be made without departing from the scope thereof. It is intended that the scope of the present invention only be limited by the scope of the appended claims.

## Claims

1. A random access method, applied to a terminal, comprising:
determining a semi-static transmission resource; and
sending an uplink message for a random access based on the semi-static transmission resource.

2. The random access method of claim 1, wherein the uplink message comprises a radio resource control, RRC, resume request and/or an RRC setup request.

3. The random access method of claim 2, wherein before sending the uplink message for the random access based on the semi-static transmission resource, the method further comprises:
determining that a time advance, TA, of an uplink data transmission for the random access is valid.

4. The random access method of claim 1, wherein the semi-static transmission resource is a semi-static transmission resource configured for a small data transmission, SDT, in an inactive state.

5. The random access method of claim 1, wherein the uplink message includes no first identification information of the terminal, and the first identification information of the terminal is identification information of the terminal in an RRC inactive state.

6. The random access method of claim 5, wherein the first identification information of the terminal is determined based on a position of the semi-static transmission resource that carries the uplink message.

7. The random access method of claim 1, further comprising:
receiving downlink control information, DCI; and
sending an acknowledgement message in response to determining that RRC resume information or RRC setup information is included in a downlink data transmission scheduled by the DCI.

8. The random access method of claim 7, wherein the RRC resume message or the RRC setup information includes no contention resolution information.

9. The random access method of claim 1, further comprising:
acquiring second identification information of the terminal based on received indication information or a communication protocol, wherein the second identification information of the terminal is configured for data scheduling and data transmission.

10. A random access method, applied to a network device, comprising:
receiving an uplink message for a random access sent by a terminal based on a semi-static transmission resource.

11. The random access method of claim 10, wherein the uplink message comprises a radio resource control, RRC, resume request and/or an RRC setup request.

12. The random access method of claim 10, wherein the semi-static transmission resource is a semi-static transmission resource configured for a small data transmission, SDT, in an inactive state.

13. The random access method of claim 10, wherein the uplink message includes no first identification information of the terminal, and the first identification information of the terminal is identification information of the terminal in an RRC inactive state.

14. The random access method of claim 13, wherein the first identification information of the terminal is determined based on a position of a semi-static resource that carries the uplink message.

15. The random access method of claim 10, further comprising:
sending downlink control information, DCI, in response to receiving the uplink message, wherein a downlink data transmission scheduled by the DCI comprises RRC resume information or RRC setup information that is indicated to the terminal.

16. The random access method of claim 15, wherein the RRC resume message or the RRC setup information includes no contention resolution information.

17. The random access method of claim 13, further comprising:
sending an indication message, wherein the indication message comprises second identification information of the terminal, and the second identification information of the terminal is configured for data scheduling and data transmission.

18. A random access apparatus, applied to a terminal, comprising:
a processing module configured to determine a semi-static transmission resource; and
a sending module configured to send an uplink message for a random access based on the semi-static transmission resource.

19. A random access apparatus, applied to a network device, comprising:
a receiving module configured to receive an uplink message for a random access sent by a terminal based on a semi-static transmission resource.

20. A random access device, comprising:
a processor; and
a memory for storing instructions executable by the processor;
wherein the processor is configured to perform the random access method of any one of claims 1 to 9, or the random access method of any one of claims 10 to 17.

21. A storage medium having stored therein instructions that, when executed by a processor of a mobile terminal, enable the mobile terminal to perform the random access method of any one of claims 1 to 9, or enable the mobile terminal to perform the random access method of any one of claims 10 to 17.
